# EUROPEAN PATENT SPECIFICATION

(11) **EP 1 962 461 B1**
(45) Date of publication and mention of the grant of the patent: **07.07.2010**
(21) Application number: 06804973.3
(22) Date of filing: 18.10.2006
(51) Int. Cl.: H04L 12/58

(54) **METHOD FOR REALIZING GROUP-SENDING MESSAGE SERVICE, DEVICE AND SYSTEM FOR THE SAME**
VERFAHREN, VORRICHTUNG UND SYSTEM ZUR ERBRINGUNG EINES DIENSTES ZUM GRUPPENBASIERTEN SENDEN VON NACHRICHTEN
PROCEDE DE FOURNITURE DE SERVICES D'ENVOI GROUPE DE MESSAGES, DISPOSITIF ET SYSTEME ASSOCIES

(30) Priority: 22.12.2005 CN 200510121231
(43) Date of publication of application: 27.08.2008
(73) Proprietor: Huawei Technologies Co., Ltd., Longgang District, Shenzhen Guangdong 518129 (CN)
(72) Inventor: MA, Yubao, Guangdong 518129 (CN)
(74) Representative: Thun, Clemens
(86) International application number: PCT/CN2006/002754
(87) International publication number: WO 2007/071145

(56) References cited:
- WO-A-2004/102992
- WO-A1-03/067908
- CN-A- 1 452 416
- CN-A- 1 501 723
- CN-A- 1 589 564
- US-A1- 2002 112 014
- US-A1- 2003 114 174
- US-B1- 6 400 942

## Description

### FIELD OF THE INVENTION

The present invention relates to IP Multimedia Subsystem (IMS) network technologies in the communication field, and in particular to a method, device, and system for realizing a group-sending message service.

### BACKGROUND

Message service is one of the most widely used data services in the current mobile communication market. With the development of communication technologies, especially the emergence of IMS domain, the content offered by the message service becomes increasingly abundant. Currently, the message service mainly includes short message service (SMS), multimedia messaging service (MMS), instant messaging (IM), E-mail, voice mail, and so on. Group-sending message is one of the basic requirements for the message service, and has prosperous and wide applications. Presently, in the mobile communication for Circuit Switched (CS) domain and Packet Switched (PS) domain, the group-sending message function is generally achieved through cyclic operations of the sending user or cyclical sending operations of a mobile user equipment (UE) as the sending party, and the message server (SMS center or MMS center) itself is not responsible for group-sending messages. In the prior art, it mainly includes the following solutions:

1. Group-sending message service based upon cyclic operations of the user

The basic concept of the solution is: the sending user repeatedly inputs numbers of destination users for many times after writing a short message and sends the message to the message server for many times, so as to achieve the group-sending of the message. This solution has the following defects:

1) The UE has to communicate with the server for many times, which occupies network resources.

2) Group-sending message to a local group or a remote group is not supported.

3) The user has to track the operation all the way, and the group-sending speed is rather low, which causes an unpleasant user experience.

2. Group-sending message service based upon the cyclic sending operation by the UE

The basic concept of the solution is that: the sending user edits a message, assigns a local group, and then instructs the UE to send the message. The UE cyclically sends messages to individual users in the group. The solution has the following defects.

1) The UE still has to communicate with the server for many times, which occupies network resources.

2) The group-sending messages to a remote group, a few of individual irrelevant recipients, and a group of recipients mixed by a local group, a remote group, and individual recipients are not supported.

3) The group-sending operation is achieved through cyclically sending by the UE, which is restricted by the limit of UE capability, and the UE has to send a message for many times, which is rather slow and thus causes an unpleasant user experience.

3. Group-sending message service based on Internet

The basic concept of the solution is to connect to Internet through the cell phone terminal, so as to use the instant messaging software, chat room, and E-mail on the network for group-sending messages. The solution has the following defects:

1) The user has to pay an additional fee and use a cell phone terminal capable of accessing Internet. The mobile telecommunication user has to subscribe the Internet network services.

2) The receiving user and the receiving manner thereof are restricted. Particularly, the message can only be sent to users who have registered in the chatting software. Only those receiving users, who have had the network chatting software bound to his/her mobile UEs, can receive group-sending messages through the cell phone terminals.

4. Group-sending message service based on address interface extension or remote group customization

The basic concept of the solution is that: the group-sending message service is achieved by customizing a remote group in the server or extending the address interfaces between the UE and the server to send a plurality of recipients' addresses to the server once. The solution requires only one communication between the UE and the server, which greatly saves the network resources. However, the solution has the following defects.

1) The destination users cannot be selected flexibly. In other words, the destination users are either a pre-customized remote group or a group of several local users. Additionally, the group-sending message service to a group of recipients mixed by a local group, a remote group, and individual recipients is not supported.

2) In selecting local users for group-sending, the number of recipients is limited by the interface, which is typically not more than six, which affects the flexibility of the group-sending message service and causes a low efficiency.

US 2003/114 174 discloses a SMS-based Instant Messaging System. Short messages are addressed to an IM application where the message body is analysed to obtain the addresses of users for receiving the message.

### SUMMARY

The present invention is directed to a method, device and system for realizing a group-sending message service to a plurality of users flexibly.

To achieve the above objective, the present invention adopts a technical solution as follows.

According to an embodiment, the present invention provides a method for realizing a group-sending message service, which includes:

receiving a message from a user equipment(UE) , wherein a message body of the message contains a message content to be sent to a plurality of recipients and address information of the plurality of recipients assigned by a user and a destination address of the message is set as a specific uniform resource identifier (URI);

determining the massage is a group-sending message according to the destination address of the message;

analyzing the message to obtain addresses of all common users in the recipients; and

constructing messages according to the addresses of all common users, and sending the messages individually.

According to an embodiment, the present invention provides a device for realizing a group-sending message service, which includes a message sending and receiving unit, a message address detecting unit, a message destination address analyzing unit, and a message destination address reconstruction unit.

The message sending and receiving unit is adapted to receive and send a message. A message body of the message contains message content to be sent to a plurality of recipients and address information of the plurality of recipients assigned by a user and a destination address of the message is set as a specific uniform resource identifier (URI).

The message address detecting unit is adapted to detect whether the destination address of a message received by the message sending and receiving unit is the specific URI or not, if the destination address is the URI, the massage is determined to be a group-sending message;

The message destination address analyzing unit is adapted to extract an address of each recipient from the message body when the destination address of the message detected by the message address detecting unit is a specific URI; and

The message destination address reconstruction unit is adapted to construct messages to be sent to common users based on the address of each recipient extracted by the message destination address analyzing unit, and transmit the constructed messages to the message sending and receiving unit.

According to an embodiment, the present invention provides a system for realizing a group-sending message service, which includes a URI-list server and a message application server communicating with a user equipment (UE).

The UE is adapted to edit message content to be sent to a plurality of recipients and address information of the plurality of recipients assigned by a user into a message body of a message, set a destination address of the message as a specific uniform resource identifier (URI) which is used to identify the massage is a group-sending message, and then send the constructed message to the message application server.

The message application server is adapted to receive a message from the user equipment (UE), detect whether the destination address of the received message is a specific URI or not, and obtain addresses of all common users according to addresses information of recipients when the destination address of the message is a specific URI, construct messages according to the addresses of common users and send the messages.

The URI-list server is adapted to analyze the message body of the message to obtain addresses information of recipients for being used by the message AS.

With the above technical solution, the present invention achieves the following advantageous technical effects. The group-sending address list is edited into the message body, and a specific URI is taken as a symbol for the server to recognize the message containing the group-sending address list, so that the user has a great flexibility in assigning target recipients, without being limited by the type and number of the recipients. Therefore, the group-sending message service becomes more abundant in functions, and what's more, the provider can even supply a group-sending message to customers as a separate service, thus having a desirable commercial value.

### BRIEF DESCRIPTION OF THE DRAWING(S)

Figure 1 is a flow chart for realizing a group-sending message service according to one embodiment of the present invention;

Figure 2 is a principle block diagram of a device according to one embodiment of the present invention;

Figure 3 is a principle block diagram of a device according to one embodiment of the present invention;

Figure 4 is a schematic view of a networking system according to one of the present invention;

Figure 5 is a schematic view of a networking system according to one embodiment of the present invention;

Figure 6 is a schematic view of a networking system according to one embodiment of the present invention; and

Figure 7 is a schematic view of a networking system according to one embodiment of the present invention.

### DETAILED DESCRIPTION

The present invention is further described in detail below through the detailed descriptions by reference to the drawings.

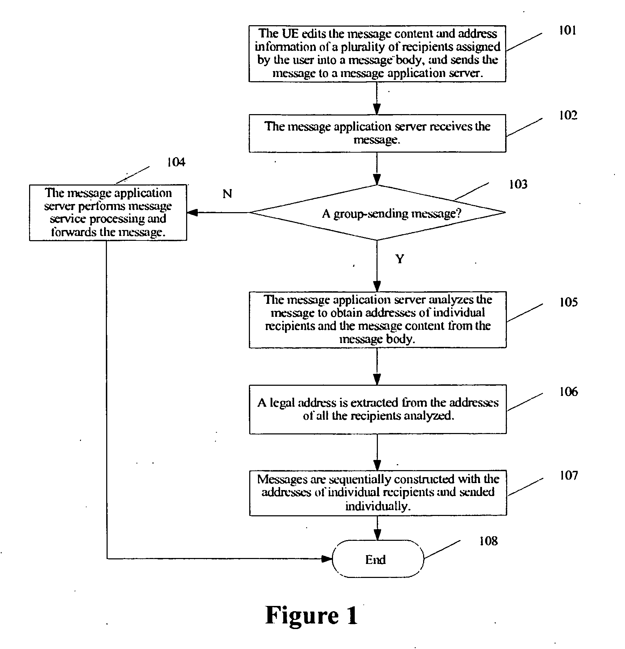

Figure 1 is a flow chart for realizing a group-sending message service according to a preferred embodiment of the present invention, which includes the following steps.

Block 101: The user equipment (UE) edits the message content and address information of a plurality of recipients assigned by the user into a message body, and sends the message to a message application server.

The UE may edit a group-sending address list formed by the addresses of the plurality of recipients assigned by the user into the message body. The group-sending address list includes URIs of common users and/or a URI of a remote group. With respect to the common users and/or the remote group, the URIs thereof may be directly used to form a recipient list. With respect to a local group assigned by the user, the URIs of common users and/or a remote group in the local group may be extracted and added into the recipient list.

When the system is planned, the message destination address of a group-sending message may be agreed as a specific URI, such as the URI of the message application server, or the URI of the remote group. Thus, the UE may set the destination address of a group-sending message to be sent to a plurality of recipients as the specific URI, so that the message application server can recognize the group-sending message once it receives the message, and carry out corresponding processing.

Block 102: The message application server receives the message.

In Block 103, the message application server determines whether the received message is a group-sending message or not based on the destination address thereof.

As mentioned above, the destination address of the group-sending message is agreed as a specific URI. Therefore, upon receiving the message, the message application server determines whether the message is a group-sending message or not based on the destination address thereof.

If the destination address of the message is a URI of a common user, the message is not a group-sending message; if the destination address of the message is a specific URI, such as the URI of the message application server or the URI of the remote group, the message is a group-sending message.

If the message is not a group-sending message, proceeds to Block 104; otherwise, proceeds to Block 105.

Block 104: The message application server performs message service processing and sends the message. Then, it turns to Block 108.

Block 105: The message application server analyzes the message to obtain addresses of individual recipient from the message body.

In practical implementation, if the destination address of the message is the URI of a remote group, the URI of the remote group is sent to a group application server in the network. The group application server with remote group information of the user stored therein analyzes an address of each common user in the remote group based on the remote group information of the user, and sends the analysis result to the message application server. Of course, the remote group information of the user may be stored in the message application server, and the message application server finishes the analyzing process directly.

If the destination address of the message is the URI of the message application server, the message application server analyzes the group-sending address list carried in the message, so as to obtain an address of each recipient in the group-sending address list.

It should be noted that, The URIs of a remote group may exist in the individual recipients after the application server finishing the analysis. As for the URIs of the remote group, the address of each common user in the remote group may be analyzed by the message application server itself or the group application server as described above.

Block 106: A valid address is extracted from the addresses of all the common users analyzed.

Block 107: Messages are sequentially constructed with the addresses of individual common users and sent individually.

Block 108: This flow ends.

As known from the above process, with the present invention, any user can select group send messages when sending messages as a caller, so long as the user has applied the message service. Moreover, the recipients of the group-sending message may be a local group, a remote group, or a group of recipients randomly mixed by a local group, a remote group, and individual recipients. Then, the message application server sends the message. The message application server can implement the process of sending the message to all the assigned recipients simply through the UE at the sending party sending a message to the message application server once.

If the assigned recipient is merely a remote group, the UE simply needs to edit the message content into the message body, set the destination address of the message as the URI of the remote group, and send the message to the message application server. After receiving the message, the message application server determines the message as a group-sending message based on the destination address thereof. Here, the message application server may analyze the URI of the remote group by itself, or send the URI of the remote group to a group application server in the network for being analyzed to obtain addresses of individual common users corresponding to the URI of the remote group. Thereafter, the messages are constructed on the basis of the addresses of individual common users and sent individually.

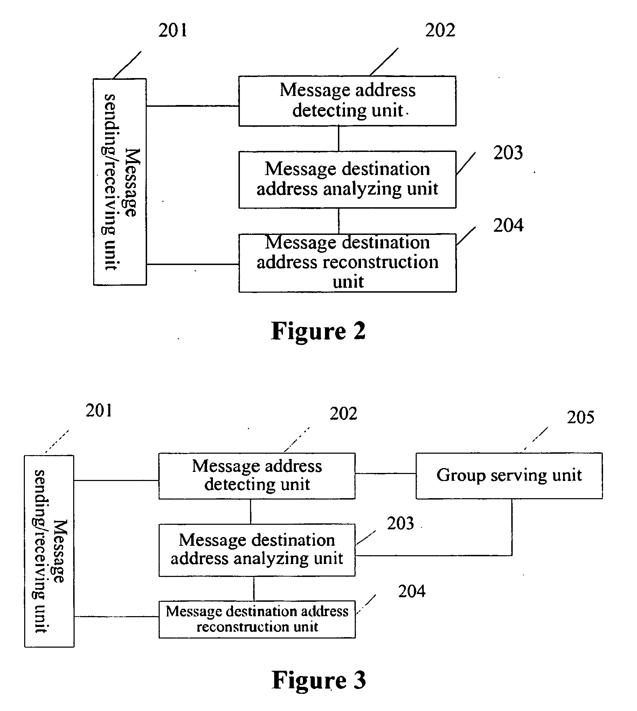

Figure 2 is a principle block diagram of a device for realizing a group-sending message service according to one embodiment of the present invention.

The device includes a message sending and receiving unit 201, a message address detecting unit 202, a message destination address analyzing unit 203, and a message destination address reconstruction unit 204.

The message sending and receiving unit 201 is adapted to receive and send a message. As mentioned in the above descriptions of the method according to the present invention, when the user wants to send a group-sending message, the UE needs to edit the message content and address information of a plurality of recipients assigned by the user into a message body for sending. Therefore, the message received by the message sending and receiving unit 201 may be a single sending message or a group-sending message, and the message body of the group-sending message contains the message content and the address information of the recipients assigned by the user.

The message address detecting unit 202 detects the message received by the message sending and receiving unit 201 to determine whether the destination address of the message is a specific URI or not, and if the destination address of the message is a specific URI, the message destination address analyzing unit 203 is notified to extract an address of each recipient from the message body in order to obtain addresses of all common users. Then, the message destination address reconstruction unit 204 constructs the messages to be sent to individual common users based on the address of each common user extracted by the message destination address analyzing unit 203 and transmits the constructed messages to the message sending and receiving unit 201. The message sending and receiving unit 201 sends the messages sequentially to the corresponding common users. If the destination address of the message is not a specific URI, other service processing for the message is directly performed or the message is forwarded.

The specific URI may be the URI of a remote group or the URI of the present device. Besides, the addresses of the plurality of recipients assigned by the user include not only the addresses of common users, but also the address of a remote group assigned by the user. Therefore, a group serving unit is further configured in the device according to the present invention, and adapted to store the remote group information of the user. When the URIs of a remote group further exist in the address information of the recipients assigned by the user, the address of each common user in the group is extracted and returned to the message destination address analyzing unit.

Figure 3 is a principle block diagram of a device according to one embodiment of the present invention.

The group serving unit 205 is respectively communicated with the message address detecting unit 202 and the message destination address analyzing unit 203.

If the message address detecting unit 202 detects that the destination address of the message received by the message sending and receiving unit 201 is the URI of a remote group, the URI of the remote group is sent to the group serving unit 205. Then, the group serving unit 205 analyzes addresses of all the common users in the group based on the remote group information of the user stored therein, and returns the analysis result to the message destination address analyzing unit 203.

If the message address detecting unit 202 detects that the destination address of the message received by the message sending and receiving unit 201 is the URI of the present device, the message address detecting unit 202 notifies the message destination address analyzing unit 203 to extract the address of each recipient and the message content from the message body. If the addresses of the plurality of recipients assigned by the user include a remote group address, the remote group address is analyzed and sent to the group serving unit 205. Then, the group serving unit 205 analyzes the addresses of all the recipients corresponding to the remote group based on the remote group information of the user stored therein, and returns the analysis result to the message destination address analyzing unit 203.

The group serving unit 205 may also serve as an independent entity for achieving the function of group address analyzing, for example, a group application server in the existing network. In this case, the group serving unit 205 may interact with the message destination address analyzing unit 203 through an XCAP(XML Configuration Access Protocol) and return the extracted addresses of common recipients in the group to the message destination address analyzing unit 203 in the form of XML text. Other protocols and text formats may be employed.

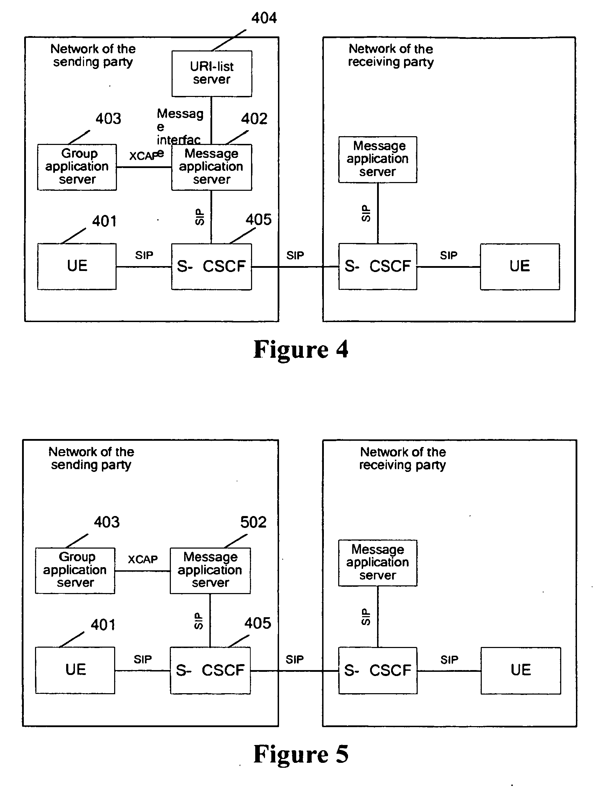

The present invention further provides a system for realizing a group-sending message service. Figure 4 is a schematic view of a networking system according to one embodiment of the present invention. The main network entities include:

An UE 401 edits the message content and the group-sending address list assigned by the user into a message body, sets the destination address of the message into a specific URI, and sends the message.

A message application server ( AS ) 402 is responsible for the message service processing, which mainly includes: receiving the message; detecting whether the destination address of the message is a specific URI or not, and if the destination address of the message is a specific URI, sending the group-sending address list in the message body to the URI-list server and requesting the URI-list server to analyze the list; receiving addresses of individual recipients sent back from the URI-list server; determining whether there are URIs of a remote group existing among the addresses of individual recipients sent back from the URI-list server or not, and if there are URIs of a remote group existing among the addresses of individual recipients sent back from the URI-list server, sending the URIs of the remote group to the group AS individually; receiving addresses of common users sent back from the group AS; and then constructing and sending messages individually.

The message AS includes a message sending and receiving unit, a message address detecting unit, a message destination address analyzing unit, and a message destination address reconstruction unit. The message sending and receiving unit is adapted to receive and send a message. The message address detecting unit is adapted to detect whether the destination address of the received message is a specific URI or not. The message destination address analyzing unit is adapted to extract the address information of each recipient and the message content from the message body. The message destination address reconstruction unit is adapted to construct messages to be sent to individual common users based on the address of each common users and the message content extracted by the message destination address analyzing unit, and transmit the constructed messages to the message sending and receiving unit. The operating principles thereof have been demonstrated in the above description of the device according to the present invention, which will not be described again herein.

A group AS 404 is adapted to store remote group information of the user. The group AS 404 receives a request from the user to store a remote group of the user, analyzes the URI of the remote group sent by the message AS, and returns all the information contained in the group to the message AS generally in the form of XML text. Generally, the message AS interact with the group AS through an XCAP.

The URI-list server 403 is adapted to analyze the group-sending address list carried in the message to split the list into individual Session Initiated Protocol (SIP) URIs for being used by the message AS, and communicate with the message AS via a message interface.

The network entities may also include a Serving Call Session Control Function (S-CSCF, one of the essential elements in an IMS network) entity 405. The UE may communicate with the Message AS through the IMS network elements such as the S-CSCF based on the SIP protocol.

The group AS and the URI-list server are two functional entities. In practical application, they may be integrated with the message AS. That is, the message AS is responsible for analyzing the URI list or analyzing the remote group, while handling the message service.

Figure 5 is a schematic view of a system according to one embodiment of the present invention.

In this embodiment, the message AS 502 provides the function of the URI-list server.

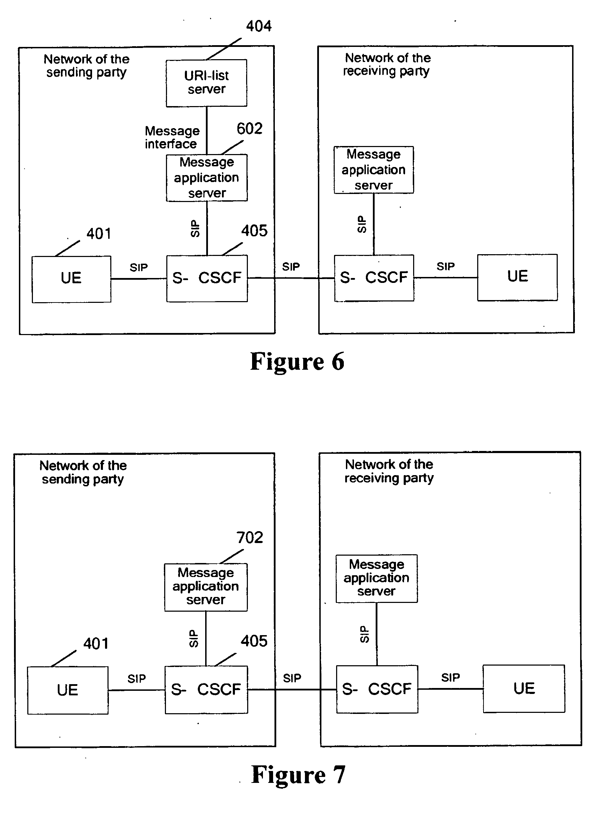

Figure 6 is a schematic view of a system according to one embodiment of the present invention.

In this embodiment, besides handling the message service, the message AS 602 also serves as a group AS for analyzing the remote group.

Figure 7 is a schematic view of a system according to one embodiment of the present invention.

In this embodiment, the message AS 702 provides the functions of both the group AS and the URI-list server.

With the system according to the present invention, the process of message group-sending is realized as follows:

1) The UE edits the message content and the group-sending address list assigned by the user into the message body, sets the destination address of the message as the URI of the Message AS, then sends the message to the Message AS. The group-sending address list contains URIs of several common users and/or a remote group.

In order to enable the user to select the destination recipients flexibly, the UE may construct the group-sending address list in such a manner that: if the recipients assigned by the user are several irrelevant common users and/or a remote group, the URIs thereof are directly used to form the recipient list; if the recipients assigned by the user further include a local group, URIs of common users and/or a remote group in the local group are extracted and added into the recipient list. In this way, the user can freely select irrelevant common users, a local group, and a remote group to form a group of recipients, which is convenient for using the service.

Furthermore, if the recipient assigned by the user is a single common user or a single remote group, the UE may directly set the destination address of the message as the recipient. Both the above two cases are handled according to existing point-to-point messaging and point-to-multipoint customized group messaging respectively, the present invention is not involved at all.

2) Upon receiving the request to send a message from the user, the Message AS first detects whether the destination address of the message is the URI of the Message AS or not, and if the destination address of the message is the URI of the Message AS, it is indicated that the message body of the message contains a group-sending address list. The Message AS thus sends the group-sending address list to the URI-list server and requests the URI-list server to analyze the list.

Furthermore, if the address is determined to be the URI of a common user, the message service is directly handled and the message is sent. If the address is determined to be the URI of a remote group, it is indicated the message is a point-to-multipoint customized group-sending message. The Message AS needs to send the URI thereof to the Group AS, requests the Group AS to analyze the URI, and then send the messages individually based on the analysis result. In both the above cases, the processing may be proceeded according to the existing flow.

3) The URI-list server analyzes the URIs of individual recipients from the group-sending address list and sends the URIs to the Message AS.

4) The Message AS first determines whether the URIs for a remote group exist among the URIs of the recipients or not, and if the URIs for a remote group exist among the URIs of the recipients, sends the URIs of the remote group to the Group AS one bye one. The Group AS analyzes the received URIs of the remote group and sends back URIs of common users in the remote group to the Message AS.

After obtaining all the URIs, the Message AS extracts legal URIs from the URIs of all the common users, and constructs messages through using individual legal URIs and sends the messages individually. The legality verification aims at ensuring the validity of information to be sent, so as to avoid meaningless wastes of network resources.

The present invention can realize a group-sending message service based on an IMS network. The sending user can rapidly send the same message to a plurality of recipients merely through a single operation. As for the sending party, such a group-sending solution has simple operation and abundant functions, which reduces the interaction frequencies between the UE and the message server, alleviates the burden of the server, and enhances the network performance. As for the operators, the current group-sending message service enriches the content of the message service and satisfies the users' requirement for sending the same message to a plurality of users through simple operations, which may attract more users to subscribe the message service. Besides, the operator may offer the group-sending message service to users as a separate service, thereby gaining more profits, which provides the present invention with a broad commercial prospect.

Though the objectives, technical schemes, and beneficial effects of the present invention have been disclosed above by exemplary embodiments, the present invention is not limited to these. Any modifications, equivalent substitutions, and variations made within the scope of the present invention fall within the scope of the present invention.

## Claims

1. A method for realizing a group-sending message service, comprising:
receiving a message from a user equipment (UE), wherein a message body of the message contains a message content to be sent to a plurality of recipients and address information of the plurality of recipients assigned by a user and a destination address of the message is set as a specific uniform resource identifier (URI);
determining the message is a group-sending message according to the destination address of the message;
analyzing the message to obtain addresses of all common users in the recipients; and
constructing messages according to the addresses of all common users, and sending the messages individually

2. The method according to claim 1, wherein the process of determining the message is a group-sending message according to the destination address of the message comprises:
detecting the destination address of the message, if the destination address of the message is the specific URI, the message containing address information of a plurality of recipients.

3. The method according to claim 1, wherein the process of analyzing the message to obtain addresses of all common users in the recipients comprises:
analyzing the message to obtain addresses of individual recipients from the message body, wherein the addresses of individual recipients comprise addresses of common users and/or addresses of remote groups;
if the addresses of individual recipients comprise the addresses of the remote groups, further analyzing the addresses of the remote groups to obtain the addresses of common users in the remote groups.

4. A device for realizing a group-sending message service, comprising:
a message sending and receiving unit adapted to receive and send a message, wherein a message body of the message contains message content to be sent to a plurality of recipients and address information of the plurality of recipients assigned by a user and a destination address of the message is set as a specific uniform resource identifier (URI);
a message address detecting unit adapted to detect whether a destination address of a message received by the message sending and receiving unit is the specific URI or not, if the destination address is the specific URI, the message is determined to be a group-sending message;
a message destination address analyzing unit adapted to extract an address of each recipient from the message body when the destination address of the message detected by the message address detecting unit is a specific URI; and
a message destination address reconstruction unit adapted to construct messages to be sent to common user based on the address of each recipient extracted by the message destination address analyzing unit, and transmit the constructed message to the message sending and receiving unit.

5. The device according to claim 4, further comprising:
a group serving unit communicating with the message address detecting unit and the message destination address analyzing unit, adapted to store remote group information of the user, and extract addresses of common users in the remote group and return the addresses of common users to the message destination address analyzing unit when an address of remote group exists in the address information of the recipients assigned by the user.

6. The device according to claim 5, wherein the group serving unit returns the extracted addresses of common users to the message destination address analyzing unit in a format of an extensible markup language (XML) text.

7. A system for realizing a group-sending message service, comprising: a URI-list server and a message application server communicating with a user equipment (UE), wherein,
the UE is adapted to edit message content to be sent to a plurality of recipients and address information of a plurality of recipients assigned by a user into a message body of a message, set a destination address of the message as a specific uniform resource identifier (URI) which is used to identify the massage is a group-sending message, and send the message to the message application server,
the message application server is adapted to receive a message from the user equipment (UE), detect whether the destination address of the received message is a specific URI or not, and obtain addresses of all common users according to addresses information of recipients when the destination address of the message is a specific URI, construct messages according to the addresses of common users, and send the messages;
the URI-list server is adapted to analyze the message body of the message to obtain addresses information of recipients for being used by the message AS.

8. The system according to claim 7, further comprising:
a group application server adapted to store remote group information of the user, interact with the message application server, extract an address of each common users contained in the address of remote group and return the addresses to the message application server when address of remote group exist in the addresses information of recipients assigned by the user.

9. The system according to claim 8, wherein the group application server and the message application server interact with each other via an extensible markup language (XML) configuration access protocol (XCAP).

10. The system according to claim 8, wherein the URI-list server is integrated with the message AS.

## Patentansprüche

1. Verfahren zum Realisieren eines Gruppensende-Nachrichtendienstes, mit den folgenden Schritten:
Empfangen einer Nachricht von einem Benutzergerät (UE), wobei ein Nachrichtenhauptteil der Nachricht einen zu mehreren Empfängern zu sendenden Nachrichteninhalt und durch einen Benutzer zugewiesene Adresseninformationen der mehreren Empfänger enthält und eine Zieladresse der Nachricht als ein spezifischer Uniform Resource Identifier (URI) gesetzt ist;
Bestimmen, dass die Nachricht eine Gruppensendenachricht ist, gemäß der Zieladresse der Nachricht;
Analysieren der Nachricht, um Adressen aller gemeinsamen Benutzer in den Empfängern zu erhalten; und
Konstruieren von Nachrichten gemäß den Adressen aller gemeinsamen Benutzer und individuelles Senden der Nachrichten.

2. Verfahren nach Anspruch 1, wobei der Prozess des Bestimmens, dass die Nachricht eine Gruppensendenachricht ist, gemäß der Zieladresse der Nachricht Folgendes umfasst:
Detektieren der Zieladresse der Nachricht, wobei, wenn die Zieladresse der Nachricht der spezifische URI ist, die Nachricht Adresseninformationen mehrerer Empfänger enthält.

3. Verfahren nach Anspruch 1, wobei der Prozess des Analysierens der Nachricht, um Adressen aller gemeinsamen Benutzer in den Empfängern zu erhalten, Folgendes umfasst:
Analysieren der Nachricht, um Adressen individueller Empfänger aus dem Nachrichtenhauptteil zu erhalten, wobei die Adressen individueller Empfänger Adressen gemeinsamer Benutzer und/oder Adressen von abgesetzten Gruppen umfassen;
wenn die Adressen individueller Empfänger die Adressen der abgesetzten Gruppen umfassen, weiteres Analysieren der Adressen der abgesetzten Gruppen, um die Adressen gemeinsamer Benutzer in den abgesetzten Gruppen zu erhalten.

4. Einrichtung zum Realisieren eines Gruppensende-Nachrichtendienstes, umfassend:
eine Nachrichtensende- und -empfangseinheit, die dafür ausgelegt ist, eine Nachricht zu empfangen und zu senden, wobei ein Nachrichtenhauptteil der Nachricht einen zu mehreren Empfängern zu sendenden Nachrichteninhalt und durch einen Benutzer zugewiesene Adresseninformationen der mehreren Empfänger enthält und eine Zieladresse der Nachricht als ein spezifischer Uniform Resource Identifier (URI) gesetzt ist;
eine Nachrichtenadressen-Detektionseinheit, die dafür ausgelegt ist, zu detektieren, ob eine Zieladresse einer durch die Nachrichtensende- und -empfangseinheit empfangenen Nachricht der spezifische URI ist oder nicht, wobei, wenn die Zieladresse der spezifische URI ist, bestimmt wird, dass die Nachricht eine Gruppensendenachricht ist;
eine Nachrichtenzieladressen-Analyseeinheit, die dafür ausgelegt ist, eine Adresse jedes Empfängers aus dem Nachrichtenhauptteil zu extrahieren, wenn die durch die Nachrichtenadressen-Detektionseinheit detektierte Zieladresse der Nachricht ein spezifischer URI ist; und
eine Nachrichtenzieladressen-Rekonstruktionseinheit, die dafür ausgelegt ist, zu einem gemeinsamen Benutzer zu sendende Nachrichten auf der Basis der durch die Nachrichtenzieladressen-Analyseeinheit extrahierten Adresse jedes Empfängers zu konstruieren und die konstruierte Nachricht zu der Nachrichtensende- und Empfangseinheit zu senden.

5. Einrichtung nach Anspruch 4, ferner umfassend:
eine mit der Nachrichtenadressen-Detektionseinheit und der Nachrichtenzieladressen-Analyseeinheit kommunizierende Gruppenversorgungseinheit, die dafür ausgelegt ist, Informationen abgesetzter Gruppen des Benutzers zu speichern und Adressen gemeinsamer Benutzer in der abgesetzten Gruppe zu extrahieren und die Adressen gemeinsamer Benutzer an die Nachrichtenzieladressen-Analyseeinheit zurückzugeben, wenn eine Adresse einer abgesetzten Gruppe in den durch den Benutzer zugewiesenen Adresseninformationen der Empfänger existiert.

6. Einrichtung nach Anspruch 5, wobei die Gruppenversorgungseinheit die extrahierten Adressen gemeinsamer Benutzer in einem Format eines Texts der Extensible Markup Language (XML) an die Nachrichtenzieladressen-Analyseeinheit zurückgibt.

7. System zum Realisieren eines Gruppensende-Nachrichtendienstes, umfassend:
einen URI-Listenserver und einen Nachrichtenanwendungsserver, die mit einem Benutzergerät (UE) kommunizieren, wobei
das UE dafür ausgelegt ist, zu mehreren Empfängern zu sendenden Nachrichteninhalt und durch einen Benutzer zugewiesene Adresseninformationen mehrerer Empfänger in einen Nachrichtenhauptteil einer Nachricht hinein zu editieren, eine Zieladresse der Nachricht als einen spezifischen Uniform Resource Identifier (URI) zu setzen, der verwendet wird, um zu identifizieren, dass die Nachricht eine Gruppensendenachricht ist, und die Nachricht zu dem Nachrichtenanwendungsserver zu senden;
der Nachrichtenanwendungsserver dafür ausgelegt ist, eine Nachricht von dem Benutzergerät (UE) zu empfangen, zu detektieren, ob die Zieladresse der empfangenen Nachricht ein spezifischer URI ist oder nicht, und Adressen aller gemeinsamen Benutzer gemäß Adresseninformationen von Empfängern zu erhalten, wenn die Zieladresse der Nachricht ein spezifischer URI ist, Nachrichten gemäß den Adressen gemeinsamer Benutzer zu konstruieren und die Nachrichten zu senden;
der URI-Listenserver dafür ausgelegt ist, den Nachrichtenhauptteil der Nachricht zu analysieren, um Adresseninformationen von Empfängern zur Verwendung durch den Nachrichten-AS zu erhalten.

8. System nach Anspruch 7, ferner umfassend:
einen Gruppenanwendungsserver, der dafür ausgelegt ist, Informationen abgesetzter Gruppen des Benutzers zu speichern, mit dem Nachrichtenanwendungsserver in Dialog zu treten, eine in der Adresse der abgesetzten Gruppe enthaltene Adresse jedes gemeinsamen Benutzers zu extrahieren und die Adressen an den Nachrichtenanwendungsserver zurückzugeben, wenn in den durch den Benutzer zugewiesenen Adresseninformationen von Empfängern eine Adresse einer abgesetzten Gruppe existiert.

9. System nach Anspruch 8, wobei der Gruppenanwendungsserver und der Nachrichtenanwendungsserver über ein Konfigurationszugangsprotokoll (XCAP) der Extensible Markup Language (XML) miteinander in Dialog treten.

10. System nach Anspruch 8, wobei der URI-Listenserver mit dem Nachrichten-AS integriert ist.

## Revendications

1. Procédé de fourniture de services d'envoi groupé de messages, comprenant les opérations consistant à :
recevoir un message à partir d'un équipement Utilisateur (UE), un corps de message de ce message comportant un contenu de message destiné à être envoyé à une pluralité de destinataires et des informations d'adresse de la pluralité des destinataires attribués par un utilisateur, et une adresse de destination du message étant définie en tant qu'identifiant uniforme de ressource (URI) spécifique ;
déterminer que le message est un message d'envoi groupé en fonction de l'adresse de destination du message ;
analyser le message afin d'obtenir des adresses de tous les utilisateurs communs parmi les destinataires ; et
formuler des messages en fonction des adresses de tous les utilisateurs communs et envoyer les messages individuellement.

2. Procédé selon la revendication 1, le processus destiné à déterminer que le message est un message d'envoi groupé en fonction de l'adresse de destination du message comprenant les opérations consistant à :
détecter l'adresse de destination du message, si l'adresse de destination du message est l'URI spécifique, le message contenant les informations d'adresse d'une pluralité de destinataires.

3. Procédé selon la revendication 1, le processus destiné à analyser le message afin d'obtenir des adresses de tous les utilisateurs communs parmi les destinataires comprenant les opérations consistant à :
analyser le message afin d'obtenir les adresses des destinataires individuels à partir du corps du message, les adresses des destinataires individuels comportant des adresses d'utilisateurs communs et/ou des adresses de groupes distants ;
si les adresses de destinataires individuels comprennent les adresses des groupes distants, analyser en outre les adresses des groupes distants afin d'obtenir les adresses d'utilisateurs communs parmi les groupes distants.

4. Dispositif de fourniture de services d'envoi groupé de messages, comprenant :
une unité d'émission et de réception de messages conçue pour recevoir et pour envoyer un message, un corps de message de ce message comportant un contenu de message destiné à être envoyé à une pluralité de destinataires, et des informations d'adresse de la pluralité des destinataires attribués par un utilisateur, et une adresse de destination du message étant définie en tant qu'identifiant uniforme de ressource (URI) spécifique ;
une unité de détection d'adresse du message conçue pour détecter si une adresse de destination d'un message, reçu par l'unité d'émission et de réception de messages, est l'URI spécifique ou non, si l'adresse de destination est l'URI spécifique, le message est considéré comme étant un message d'envoi groupé ;
une unité d'analyse de l'adresse de destination du message conçue pour extraire une adresse de chaque destinataire à partir du corps de message lorsque l'adresse de destination du message détectée par l'unité de détection d'adresse du message est une URI spécifique ; et
une unité de reconstruction de l'adresse de destination du message conçue pour formuler des messages destinés à être envoyés à un utilisateur commun sur la base de l'adresse de chaque destinataire ayant été extraite par l'unité d'analyse de l'adresse de destination du message, et pour transmettre le message ainsi formulé à l'unité d'émission et de réception de messages.

5. Dispositif selon la revendication 4, comprenant en outre :
une unité de desserte de groupes, mise en communication avec l'unité de détection d'adresse du message et l'unité d'analyse de l'adresse de destination du message, conçue pour stocker des informations de groupes distants de l'utilisateur, et pour extraire des adresses d'utilisateurs communs parmi le groupe distant et pour renvoyer les adresses des utilisateurs communs à l'unité d'analyse de l'adresse de destination du message lorsqu'une adresse d'un groupe distant existe dans les informations d'adresse des destinataires attribués par l'utilisateur.

6. Dispositif selon la revendication 5, l'unité de desserte de groupes renvoyant les adresses extraites des utilisateurs communs vers l'unité d'analyse de l'adresse de destination du message sous un format de texte XML (langage de balisage extensible).

7. Système de fourniture de services d'envoi groupé de messages, comprenant : un serveur à liste URI et un serveur d'application (AS) de messages mis en communication avec un équipement Utilisateur (UE), dans lequel
l'UE est conçu pour éditer un contenu de message destiné à être envoyé à une pluralité de destinataires et des informations d'adresse d'une pluralité de destinataires attribués par un utilisateur en un corps de message du message, pour définir une adresse de destination du message en tant qu'identifiant uniforme de ressource (URI) spécifique qui sert à identifier que le message est un message d'envoi groupé, et pour envoyer le message au serveur d'application de messages ;
le serveur d'application de messages est conçu pour recevoir un message en provenance de l'équipement Utilisateur (UE), pour détecter si l'adresse de destination du message reçu est un URI spécifique ou non, et pour obtenir des adresses de tous les utilisateurs communs en fonction des informations d'adresses de destinataires lorsque l'adresse de destination du message est une URI spécifique, et pour formuler des messages en fonction des adresses d'utilisateurs communs, et pour envoyer les messages ;
le serveur à liste URI est conçu pour analyser le corps de message du message afin d'obtenir des informations d'adresses de destinataires destinées à être utilisées par le serveur d'application (AS) de messages.

8. Système selon la revendication 7, comprenant en outre :
un serveur d'application de groupes conçu pour stocker des informations de groupes distants de l'utilisateur, pour agir en interaction avec le serveur d'application de messages, pour extraire une adresse de chaque utilisateur commun contenue dans l'adresse du groupe distant et pour renvoyer les adresses vers le serveur d'application de messages lorsque l'adresse du groupe distant existe dans les informations d'adresses des destinataires attribués par l'utilisateur.

9. Système selon la revendication 8, le serveur d'application de groupes et le serveur d'application de messages agissant en interaction l'un avec l'autre par le biais d'un protocole d'accès à des configurations (XCAP) en langage de balisage extensible (XML).

10. Système selon la revendication 8, le serveur à liste URI étant intégré au serveur d'application (AS) de messages.
